# EUROPEAN PATENT APPLICATION

(11) **EP 3 750 807 A1**
(43) Date of publication of application: **16.12.2020**
(21) Application number: 19215252.8
(22) Date of filing: 11.12.2019
(51) Int. Cl.: B64D 11/06, E06B 9/42, E06B 9/66

(54) **COMPACT RETRACTABLE PARTITION**

(30) Priority: 10.06.2019 US 201916436191
(71) Applicant: BE AEROSPACE, INC., North Carolina 27105 (US)
(72) Inventor: ZHANG, Shengyong, REIDSVILLE, NC 27320 (US)
(74) Representative: Algemeen Octrooi- en Merkenbureau B.V.

(57) **Abstract**

A privacy partition assembly for a cabin environment including a housing (24), an extension mechanism (40), and a partition (22). The extension mechanism has a retracted condition and an extended condition. A leading link (42) moves away from the housing in a first direction when the extension mechanism transitions to the extended condition. The partition has a leading edge (72) engaged with the leading link such that, when the extension mechanism transitions, the leading edge of the partition moves away from the housing. The extension mechanism includes a jointed first arm (50) attached to a first end of the leading link, and a jointed second arm (60) attached to a second end of the leading link. The jointed first and second arms extend when the extension mechanism transitions from the retracted condition to the extended condition thereby moving the leading link away from the housing. A roller maintains the partition in a taut condition.

## Description

Aircraft seating arrangements are designed for economic and space efficiency to situate passengers in close proximity. Many travelers prefer to use flight times for resting or working, for example on laptop computers and other devices. Whether sleeping, working, or viewing selected media, a typical traveler prefers some degree of privacy. Due to cost constraints, not all travelers can afford private suites or other private accommodations.

Seating arrangements do, in some cases, come with divider walls, consoles, and other structures between adjacent seats. In a typical passenger cabin environment, even divider walls, consoles, and such are only at partial height relative to the eye level of a seated passenger. As perception of privacy is at least somewhat governed by whether mutual sight is possible among passengers, adjacent travelers may prefer improved privacy accommodations over current offerings.

Curtains and other possible solutions suspended at each of two ends on opposing sides of an area across which a privacy accommodation is wanted are not optimal if suspension rods or cables that cross the area are considered. For rapid evacuation during emergency situations, and for typical boarding and unboarding, any additional privacy measures are preferably rapidly deployed and stowed into compact form, and any likelihood of encumbering passenger movement is to be minimized or avoided.

Improvements are needed in privacy accommodations among passenger seating arrangements, particularly between close proximity seating positions where adjacent passengers may otherwise feel privacy is lost.

To achieve the foregoing and other advantages, the present invention provides a partition assembly for an aircraft cabin environment, the partition assembly including a housing, an extension mechanism, and a partition. The extension mechanism has a retracted condition and an extended condition, and the extension mechanism includes a leading link that moves away from the housing in a first direction when the extension mechanism transitions from the retracted condition to the extended condition. The partition has a leading edge engaged with the leading link of the extension mechanism such that, when the extension mechanism transitions from the retracted condition to the extended condition, the leading edge of the partition moves away from the housing in the first direction with the leading link.

In some embodiments, the extension mechanism includes a jointed first arm attached to a first end of the leading link, and a jointed second arm attached to a second end of the leading link opposite the first end. The jointed first and second arms extend when the extension mechanism transitions from the retracted condition to the extended condition thereby moving the leading link away from the housing in the first direction.

In some embodiments, each of the first arm and second arm includes at least an arm segment attached to the housing, and wherein the arm segments pivot to transition the extension mechanism from the retracted condition to the extended condition.

In some embodiments, at least one actuator pivots at least one of the arm segments relative to the housing.

In some embodiments, at least a first end of the partition is rolled upon a roller when the extension mechanism is in the retracted condition.

In some embodiments, when the extension mechanism transitions from the retracted condition to the extended condition, the partition unrolls from the roller.

In some embodiments, the partition includes a flexible material. A second end of the partition is fixedly attached to the housing, and, as the leading edge of the partition moves away from the housing in the first direction with the leading link, the flexible material travels around the leading link.

In some embodiments, a second end of the partition attached to the leading link defines the leading edge of the partition.

In some embodiments, the partition is maintained in a taut condition by tension applied to the partition by the roller.

In some embodiments, the partition has a first side and a second side between which the extension mechanism extends when the extension mechanism transitions from the retracted condition to the extended condition.

In some embodiments, the partition assembly includes a first roller and a second roller upon which at least respective portions of the first side and second side of the partition are rolled when the extension mechanism is in the retracted condition.

In some embodiments, when the extension mechanism transitions from the retracted condition to the extended condition, the first roller and the second roller rotate in opposite rotational directions to unroll the respective portions of the first side and second side of the partition.

In some embodiments, the respective portions of the first side and second side of the partition are automatically returned to the first roller and second roller when the extension mechanism transitions from the extended condition to the retracted condition.

In some embodiments, a controller is operative to cause the extension mechanism to transition from the retracted condition to the extended condition.

In some embodiments, the first direction is vertically upward.

In a second aspect the present invention provides an aircraft seating assembly including, a first seat, and a privacy partition assembly according to the first aspect of the present invention adjacent the first seat.

In some embodiments, the aircraft seating assembly further includes a second seat, wherein the partition is deployed between the first seat and second seat when the extension mechanism transitions from the retracted condition to the extended condition.

Embodiments of the present invention may include one or more or any combination of the above aspects, features and configurations.

The present invention may be better understood when consideration is given to the following detailed description thereof. Such description makes reference to the included drawings, which are not necessarily to scale, and in which some features may be exaggerated, and some features may be omitted or may be represented schematically in the interest of clarity. Like reference numbers in the drawings may represent and refer to the same or similar element, feature, or function. In the drawings:
FIG. 1 is a perspective view of a retractable partition assembly, according to the present invention, in a deployed condition;
FIG. 2 is a perspective view of the partition assembly of FIG. 1, in a retracted condition;
FIG. 3 is a front view of the partition assembly in the deployed condition of FIG. 1, with external components shown in dashed lines for illustration of an internal extension mechanism;
FIG. 4A is a side internal view of the partition assembly, according to one example, in the deployed condition of FIG. 1;
FIG. 4B is a side internal view of the partition assembly, according to the example of FIG. 4A, in a retracted condition;
FIG. 5 is a side internal view of the partition assembly, according to a second example, in the deployed condition of FIG. 1;
FIG. 6 is a side internal view of the partition assembly, according to a third example, in the deployed condition of FIG. 1;
FIG. 7 is a perspective view of an end portion of a rollable partition according to one example; and
FIG. 8 is a side view of an aircraft seating arrangement having two implementations of partition assemblies, according to the present invention, shown in deployed conditions.

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities. The aspects, features and functions described below in connection with one embodiment are intended to be applicable to the other embodiments described below except where expressly stated or where an aspect, feature or function is incompatible with an embodiment.

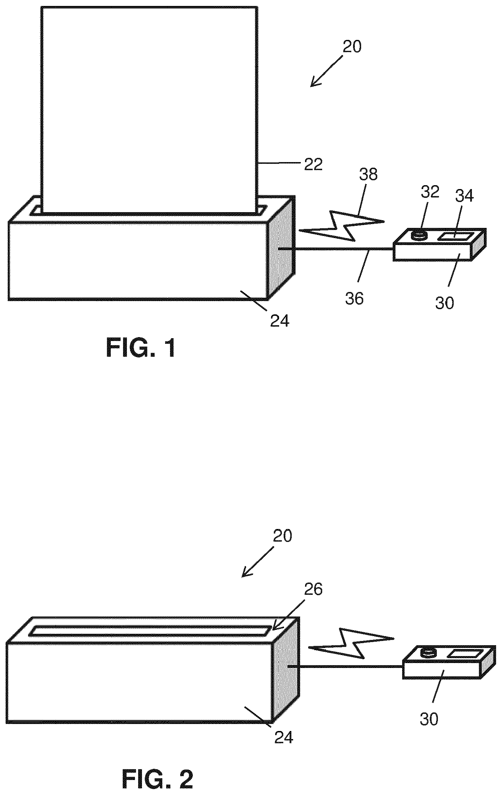

FIG. 1 shows a non-limiting example of a retractable partition assembly 20 in a deployed condition. A partition 22 is shown deployed from an enclosure housing 24 in FIG. 1. FIG. 2 shows the partition assembly 20 with the partition 22 in a retracted condition within the housing 24. The partition 22 can be deployed to cover or occlude a passenger seat position in a row of seats. For example, the partition 22 may be deployed between seated passengers for privacy. The housing 24, illustrated as having a slot 26 through which the partition 22 deploys, is broadly conceived. The partition assembly 20 can be in a modular form, as illustrated, in which the housing 24 has a box-like form. In other embodiments, the partition assembly 20 is installed within an armrest between aircraft seats or in a console or other divider between seats or adjacent a single seat. Thus, various other structures, including such armrests, consoles, and dividers can serve as the housing 24.

A controller 30 is shown as having at least one input device 32 and at least one output device 34 is shown in FIG. 1 representing many examples, by which deployment of the partition 22 can be controlled, and some of which are described with reference to the other drawings in the following. For example, the input device 32 can be a switch, upon actuation of which, the controller 30 is operative to cause extension or retraction extension mechanism 40 and partition 22. The output device 34 can be an indicator, such as an LED or other light emitter, that shows the current deployment status of the partition 22 or other status information. The controller 30 can be co-located with the partition assembly 20 or remote for use by, for example, seated passengers or flight crew members. The controller 30 is illustrated as in electrical or electronic communication with the partition assembly 20 by a wired connection 36 in FIGS. 1 and 2. The controller 30 is additionally or alternatively in communication with the partition assembly 20 by a wireless connection 38 as also represented in FIGS. 1 and 2.

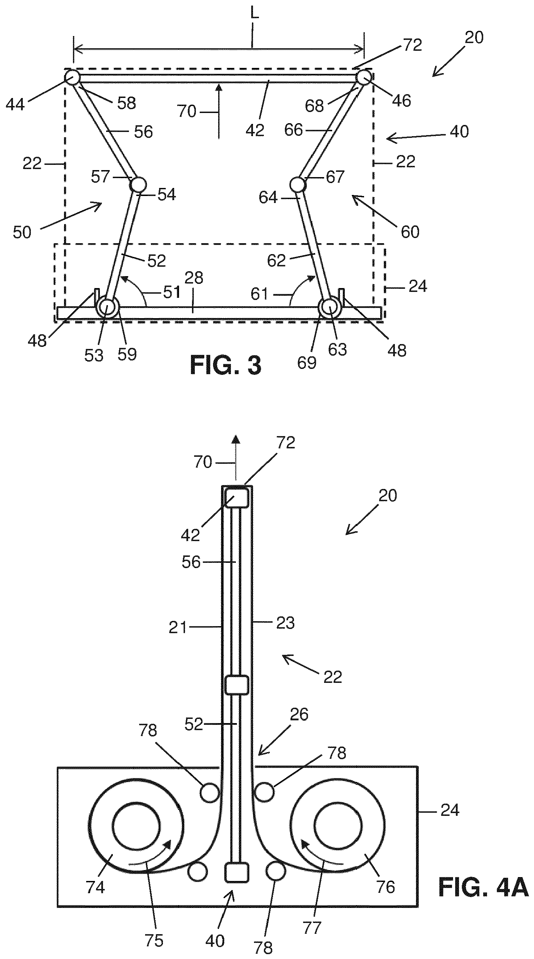

FIG. 3 is a front view of the partition assembly 20 in the deployed condition of FIG. 1, with the partition 22 and housing 24 shown in dashed lines for illustration of an internal extension mechanism 40, according to at least one example. The extension mechanism 40 includes a leading link 42 that is moved by jointed lateral arms 50 and 60 that extend and retract to extend and retract the partition 22. The jointed first arm 50 includes a first arm segment 52 and a second arm segment 56. The first arm segment 52 has a proximal end 53 pivotally attached to a fixed structure referenced as a base 28 of the housing 24. A distal end 54 of the first arm segment 52, opposite the proximal end 53, is pivotally attached to a proximal end 57 of the second arm segment 56. A distal end 58 of the second arm segment 56, opposite the proximal end 57, is pivotally attached to a first longitudinal end 44 of the leading link 42.

The jointed second arm 60 is similarly constructed, having a first arm segment 62 and a second arm segment 66. The first arm segment 62 has a proximal end 63 pivotally attached to a fixed structure referenced as a base 28 of the housing 24. A distal end 64 of the first arm segment 62, opposite the proximal end 63, is pivotally attached to a proximal end 67 of the second arm segment 66. A distal end 68 of the second arm segment 66, opposite the proximal end 67, is pivotally attached to a second longitudinal end 46 of the leading link 42, such that the first and second arms 50 and 60 are attached to opposite ends of the leading link 42.

The first arm 50 and second arm 60 articulate in coordination to move the leading link 42. By pivoting the first arm segments 52 and 62 away from the base 28, the first and second arms 50 and 60 extend and move the leading link 42 in a first linear direction 70 away from the base and housing. Directional arrows throughout the drawings, some of which represent linear directions and movements, and some of which represent angular directions and movements, represent deploying directions and motions by which the leading link 42 is carried further from the base 28 thereby further deploying the partition 22. Oppositely directed linear and angular directions and movements by which the partition 22 is to be retracted are understood at the reverse of the directional arrows in the drawings.

The first direction 70 is upward in an example of the partition assembly 20 that deploys the partition 22 vertically upward by raising the leading link 42. In another example, in which the partition assembly 20 deploys the partition 22 vertically downward by lowering the leading link 42, the first direction 70 is downward. In yet other examples, the partition assembly 20 deploys the partition 22 in horizontal directions, and in various directions between vertical and horizontal. Thus, the referenced first direction 70 can be any desired direction according to use of the partition assembly 20.

As the first arm segments 52 and 62 pivot away from the base 28, the proximal ends 57 and 67 of the second arm segments 56 and 66 are carried further from the base by the distal ends 54 and 64 of the first arm segments 52 and 62. The fixed length L of the leading link 42 maintains the distal ends 58 and 68 of the second arm segments at a constant distance. The second arm segments thereby travel and rotate as the first arm segments 52 and 62 pivot away from the base 28, and the leading link 42 moves linearly in the first direction 70. The leading link 42 engages a leading edge 72 of the partition 22, thereby moving the leading edge in the first direction 70 to deploy the partition 22 as the first arm segments 52 and 62 pivot away from the base 28.

As the first arm segment 52 and second arm segment 62 are pivoted away from the base 28 in opposite respective rotational directions 51 and 61 for deployment, the leading link 42 extends from the housing 24 in the first linear direction 70 thereby carrying the leading edge 72 of the partition 22 in the first linear direction to deploy the partition 22. To retract the partition 22 to within the housing 24, the first arm segment 52 and second arm segment 62 are pivoted toward the base 28 in opposite respective rotational directions that are in reverse to the deployment rotational directions 51 and 61. This retracts the leading link 42 toward and into the housing 24 thereby carrying the leading edge of the partition 22 in a second linear direction opposite the first linear direction 70, returning the partition 22 to the housing 24.

Mechanical stops may prevent the first arm 50 and second arm 60 from over-extending. For example, as shown in FIG. 3, respective mechanical stops 48 at the proximal ends 53 and 63 of the first arm segments 52 and 62 prevent the first arm segments from pivoting beyond a ninety-degree angle relative to the base 28.

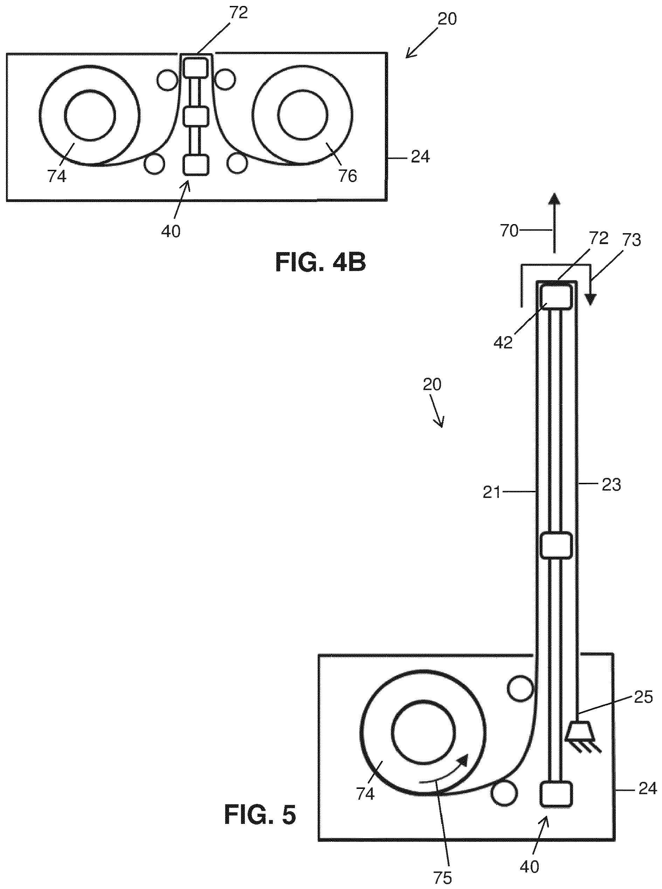

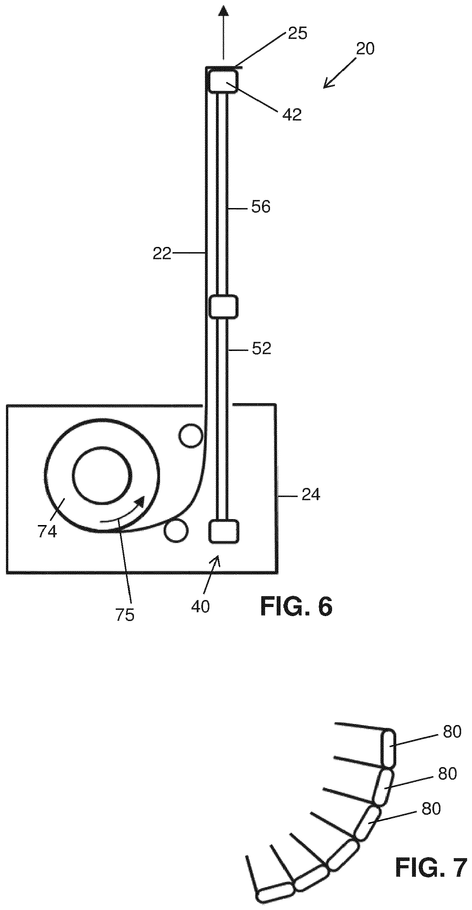

As represented in FIGS. 4A-6, the partition 22 in some examples is a flexible panel, constructed of a flexible rollable material, that is retractable by wrapping onto one or more rollers. FIGS. 4A-4B and FIG. 5 illustrate examples of double-walled partitions in which the partition 22 has two sides that together cover the extension mechanism 40 when deployed. FIG. 6 illustrates an example of a single-walled partition 22 in which only one side of the extension mechanism 40 is covered by the partition when deployed.

In FIG. 4A, in particular, the partition 22 has two sides, referenced as a first side 21 and a second side 23, between which the extension mechanism 40 articulates. The first and second side together define a double walled partition 22 and cover the extension mechanism 40 when deployed, as represented by the first and second arm segments 52 and 56 of the first arm in FIG. 4A. A spaced pair of rollers, referenced as a first roller 74 and a second roller 76, is shown with a respective portion of each side of the of the partition 22 wrapped upon each roller. The rollers 74 and 76 are rotatably mounted in the housing 24 below and at opposite sides of the slot 26. The leading edge 72 of the partition 22 is defined at the junction of the first side 21 and second side 23 of the partition 22. The extension mechanism 40 between the rollers extends the leading edge 72 of the partition 22 through the slot 26 by articulating as described with reference to FIG. 3. Idle rollers 78 guide the respective sides of the partition 22 from and to the rollers 74 and 76 as the partition 22 is extended and retracted. As the extension mechanism 40 extends to deploy the partition 22, the first roller 74 and the second roller 76 rotate in opposite respective rotational directions 75 and 77 to unroll or pay out portions of the first side 21 and second side 23 of the partition 22. As the extension mechanism 40 retracts, transitioning from the extended condition of FIG. 4A to the retracted condition of FIG. 4B, the first roller 74 and the second roller 76 rotate in opposite respective rotational directions that are in reverse to the deployment rotational directions 75 and 77 to wind portions of the partition 22 around the rollers.

The sides 21 and 23 of the partition 22 represented in FIGS. 4A-4B can be contiguous portions of a single continuous panel having opposite respective ends variably rolled on the rollers 74 and 76 depending on the degree of deployment. In that example, the panel wraps around the leading link 42 as a bend or fold in the continuous panel. In another example, the two sides 21 and 23 of the panel are non-contiguous panel portions effectively joined or interconnected at the leading link 42 to define the leading edge 72.

The partition assembly 20 of FIG. 5 includes a single roller 74 upon which the partition 22 is variably rolled depending on the degree of deployment. When deployed, the partition 22 has two sides, referenced as a first side 21 and a second side 23, between which the extension mechanism 40 articulates. The first and second side 21 and 23 together define a double walled partition 22 and cover the extension mechanism 40 when deployed. The sides 21 and 23 of the partition 22 represented in FIG. 5 are contiguous portions of a single continuous panel having opposite respective ends. A first end of the panel is variably rolled onto the single roller 74 depending on the degree of deployment. The panel wraps around the leading link 42 as a bend or fold in the continuous panel. The second end 25 of the panel is attached to a fixed point in the housing 24. As the extension mechanism 40 extends to deploy the partition 22, the roller 74 rotates in the first rotational direction 75 to unroll or pay out a portion of the partition 22. As the leading edge 72 of the partition 22 moves in the first direction 70 with the leading link 42, the panel material travels a U-path 73 around the leading link 42 as both the first side 21 and second side 23 of the panel increase. As the extension mechanism 40 retracts, the roller 74 rotates in a second rotational direction opposite the first rotational direction 75 to wind a portion of the panel around the roller as the panel material travels the U-path 73 in reverse.

The partition assembly 20 of FIG. 6 includes a single roller 74 upon which the partition 22 is variably rolled depending on the degree of deployment. A first end of the partition 22 is variably rolled onto the single roller depending on the degree of deployment. A second end 25 of the partition 22 is attached to the leading link 42 of the extension mechanism 40 and thus defines the leading edge of the partition 22. As the extension mechanism 40 extends to deploy the partition 22, the roller 74 rotates in the first rotational direction 75 to unroll or pay out a portion of the partition 22. As the extension mechanism 40 retracts, the roller 74 rotates in a second rotational direction opposite the first rotational direction 75 to wind a portion of the partition 22 around the roller.

The extension mechanism 40 is illustrated in FIG. 3 as having two jointed lateral arms 50 and 60, each supporting a respective longitudinal end 44 and 46 of the leading link 42. Other extension mechanisms are within the scope of these descriptions. For example, a scissor mechanism having crossed arms can be used. A scissor roller table mechanism can be used.

In various examples, extension and retraction of the partition 22 are powered, motorized, and biased in various ways. In at least one example, as represented in FIG. 3, a respective rotary actuator is operatively coupled to the proximal end of the first arm segment of each jointed arm. The rotary actuators 59 and 69, as controlled by the controller 30, are operable to pivot the first arm segments 52 and 62 away from the base 28, thereby extending the link mechanism 40 and partition 22. Each illustrated roller in the drawings may be powered or biased, and may be controlled by the controller 30. In at least one example, each roller is biased by one or more springs to wind the partition 22 to the retracted condition. In such examples, the leading link 42 is extended against tension in the partition 22 as applied by the roller(s). This maintains the partition 22 wall(s) in a taut and presentable condition. This also facilitates automatic return of the partition 22 to the roller(s) as the link mechanism 40 retracts. For example, as the rotary actuators 59 and 69 reverse, as controlled by the controller 30, to pivot the first arm segments 52 and 62 back toward the base 28 from an extended position, the rollers wind and stow corresponding respective partition 22 portions automatically.

In yet other examples, the link mechanism 40 is biased to an extended condition, for example by torsion springs at the proximal ends 53 and 63 of the first arm segments 52 and 62 of the jointed arms 50 and 60, to an extended condition. In such examples, one or more roller can be controlled, for example by an actuator, to effectively extend and retract the partition 22 as the link mechanism 40 persistently engages the leading edge 72 of the partition 22 and maintains tension in the partition 22.

The partition 22 and panel portions thereof are flexible to permit the one or more rollers to wind undeployed portions for stowage. The partition material can be a fabric or other rollable sheet material. The partition 22 can also be constructed of jointed longitudinally extending slats 80 as represented in FIG. 7 that are rollable. Adjacent slats 80 are pivotally interconnected to permit flexure and rolled stowage of the partition 22 on a roller. The slats 80 can be constructed of lightweight, yet sufficiently rigid and durable composite material.

In a non-limiting example, the partition assembly 20 is deployed upward from a console or armrest structure between adjacent aircraft passenger seats for the privacy of seated occupants. The partition assembly 20 is also useful in many other contexts. The partition assembly 20 can be used as a closet door, a suite door, or other privacy partition 22. The partition 22 can serve as a window shade for example. The partition 22 can deploy downward, upward, or horizontally at a door or window threshold or other area boundary.

The partition 22 can be deployed to cover or occlude a passenger seat position in a row of seats. For example, the partition 22 may be deployed between seated passengers for privacy. The housing 24, illustrated as having a slot 26 through which the partition 22 deploys, is broadly conceived. The partition assembly 20 can be in a modular form, as illustrated, in which the housing 24 has a box-like form. In other embodiments, the partition assembly 20 is installed within an armrest between aircraft seats or in a console or other divider between seats or adjacent a single seat. Thus, various other structures, including such armrests, consoles, and dividers can serve as the housing 24.

The input device 32 of the controller 30 may be available for use by either or both seated occupants in adjacent seats in a seating row. For example, the input device 32 may include separate buttons for independent use by either occupant. The controller 30 may include a logic circuit or processor that causes deployment when either one of two passengers prefers deployment for privacy, preventing the other passenger from retracting the partition 22. The controller 30 may include local and remote input devices for use by seat occupants and for use, for example for override control, by flight crew members. For example, flight crew members may prompt the partition 22 to retract for taxi, take-off, and landing (TTOL) operations despite other input commands provided by seat occupants. The deployment or retraction condition of the partition 22 may be automatically controlled in coordination with aircraft operations. In these and other examples, the controller 30 may be interfaced with or controlled by aircraft electronics systems.

The partition extension position may be infinitely variable to facilitate selection of any partition position by a passenger or flight crew member. Additionally, the partition 22 may extend to preset indexed positions such as one quarter, one half, three quarter, and fully extended. Preset partition positions may be automatically coordinated with aircraft operations or flight conditions by logic or programming at the controller 30. Obstruction detection features may be included with the partition assembly 20. For example, a sensor may be provided that detects an obstruction or detects stresses or undue forces in the link mechanism or any actuators. In the illustrated examples, the partition 22 is supported by or suspended from the housing 24 without further tracks or rails. The partition assembly 20 can therefore be installed upon or within many types of structures without extensive modification of existing equipment.

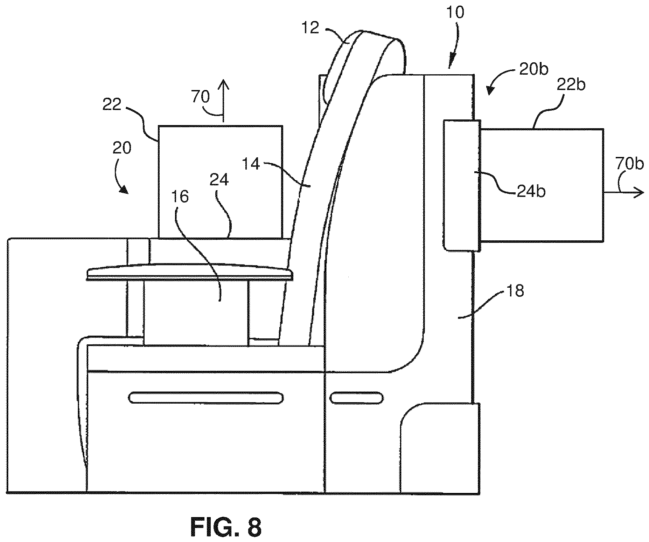

For direct illustration of an implementation in an aircraft seating arrangement or assembly, the partition assembly 20 is shown in a deployed condition in FIG. 8. An aircraft seat 10 includes a head rest 12 and a backrest 14. The armrest 16 is adjacent the seat pan of the seat 10 along an aisle for example. In the illustrated implementation, a divider wall, which serves as the housing 24 of a partition assembly 20 stands between the foreground seat 10 and a corresponding background seat on the opposite side of the divider wall. The partition 22 of the partition assembly 20 is shown deployed by vertical extension from the housing 24 in the linear first direction 70, which is vertically upward in the illustrated implementation. Thus, the partition 22 is deployed between seats on opposite sides of the divider wall for privacy of an occupant seated in either seat.

In another implementation also illustrated in FIG. 8, a second partition assembly 20b is mounted on a back wall 18 of the seat 10. The partition 22b of the partition assembly 20b is shown deployed by vertical extension from the housing 24b in the linear first direction 70b, which is horizontal in the illustrated implementation. The partition 22b is deployed for privacy or shade for example forward of a rearward seat (not shown) and to at least partially close an entrance to the corresponding rearward seating area.

While the foregoing description provides embodiments of the invention by way of example only, it is envisioned that other embodiments that are within the scope of the present invention as defined by the appended claims may perform similar functions and/or achieve similar results.

## Claims

1. A privacy partition assembly (20) for a cabin environment, the partition assembly (20) comprising:
a housing (24, 24b);
an extension mechanism (40) having a retracted condition and an extended condition, the extension mechanism (40) including a leading link (42) that moves away from the housing (24, 24b) in a first direction (70) when the extension mechanism (40) transitions from the retracted condition to the extended condition; and
a partition (22, 22b) having a leading edge (72) engaged with the leading link (42) of the extension mechanism (40) such that, when the extension mechanism (40) transitions from the retracted condition to the extended condition, the leading edge (72) of the partition (22,22b) moves away from the housing (24, 24b) in the first direction (70) with the leading link (42).

2. The partition assembly (20) according to claim 1, the extension mechanism (40) comprising a jointed first arm (50) attached to a first end of the leading link (42), and a jointed second arm (60) attached to a second end of the leading link (42) opposite the first end, wherein the jointed first (50) and second arms (60) extend when the extension mechanism (40) transitions from the retracted condition to the extended condition thereby moving the leading link (42) away from the housing (24, 24b) in the first direction (70).

3. The partition assembly (20) according to claim 2, wherein each of the first arm (50) and second arm (60) each includes at least an arm segment (52, 62, 56, 66) attached to the housing (24, 24b), and wherein the arm segments (52, 62, 56, 66) pivot to transition the extension mechanism (40) from the retracted condition to the extended condition, preferably further comprising at least one actuator (59, 69) that pivots at least one of the arm segments (52, 62, 56, 66) relative to the housing (24, 24b).

4. The partition assembly (20) according to one or more of the preceding claims, further comprising a roller (74) upon which at least a first end of the partition (22, 22b) is rolled when the extension mechanism (40) is in the retracted condition and/or from which the partition unrolls when the extension mechanism transitions from the retracted condition to the extended condition.

5. The partition assembly (20) according to claim 4, wherein, when the extension mechanism (40) transitions from the retracted condition to the extended condition, the partition (22, 22b) unrolls from the roller (74).

6. The partition assembly (20) of claim 5, wherein the partition (22, 22b) comprises a flexible material, a second end of the partition (22, 22b) is fixedly attached to the housing (24, 24b), and as the leading edge (72) of the partition (22, 22b) moves away from the housing (24, 24b) in the first direction (70) with the leading link (42), the flexible material travels around the leading link (42).

7. The partition assembly (20) of claim 5 or 6, wherein a second end of the partition (22, 22b) attached to the leading link (42) defines the leading edge (72) of the partition (22, 22b), and/or wherein the partition (22, 22b) is maintained in a taut condition by tension applied to the partition (22, 22b) by the roller (74).

8. The partition assembly (20) according to one or more of the preceding claims, wherein the partition (22, 22b) has a first side and a second side between which the extension mechanism (40) extends when the extension mechanism (40) transitions from the retracted condition to the extended condition.

9. The partition assembly (20) according to one or more of the preceding claims, further comprising a first roller (74) and a second roller (76) upon which at least respective portions of the first side and second side of the partition (22, 22b) are rolled when the extension mechanism (40) is in the retracted condition.

10. The partition assembly (20) according to one or more of the preceding claims, wherein, when the extension mechanism (40) transitions from the retracted condition to the extended condition, the first roller (74) and the second roller (76) rotate in opposite rotational directions to unroll the respective portions of the first side and second side of the partition (22, 22b).

11. The partition assembly (20) of claim 9 or 10, wherein, the respective portions of the first side and second side of the partition (22, 22b) are automatically returned to the first roller (74) and second roller (76) when the extension mechanism (40) transitions from the extended condition to the retracted condition.

12. The partition assembly (20) according to one or more of the preceding claims, further comprising a controller (30) operative to cause the extension mechanism (40) to transition from the retracted condition to the extended condition.

13. The partition assembly (20) according to one or more of the preceding claims, wherein the first direction (70) is vertically upward.

14. An aircraft seating assembly comprising:
a first seat (10); and
a privacy partition assembly (20) according to one or more of the preceding claims adjacent the first seat (10).

15. The aircraft seating assembly of claim 14, further comprising a second seat, wherein the partition (22, 22b) is deployed between the first seat and second seat when the extension mechanism (40) transitions from the retracted condition to the extended condition.
